# EUROPEAN PATENT SPECIFICATION

(11) **EP 3 358 571 B1**
(45) Date of publication and mention of the grant of the patent: **15.07.2020**
(21) Application number: 16852161.5
(22) Date of filing: 05.05.2016
(51) Int. Cl.: G21C 3/338, G21C 3/12, G21C 1/02, G21C 15/06, G21C 15/28

(54) **FAST NEUTRON REACTOR FUEL ROD**
KERNREAKTORBRENNSTAB FÜR REAKTOR MIT SCHNELLEN NEUTRONEN
CRAYON DE COMBUSTIBLE POUR RÉACTEUR À NEUTRONS RAPIDES

(30) Priority: 30.09.2015 RU 2015141674
(43) Date of publication of application: 08.08.2018
(73) Proprietor: State Atomic Energy Corporation "Rosatom" on Behalf of The Russian Federation, Moscow 119017 (RU)
(72) Inventor: FORSTMAN, Vladimir Aleksandrovich, Moscow 167562 (RU)
(74) Representative: Boskovic, Davor
(86) International application number: PCT/RU2016/000274
(87) International publication number: WO 2017/058053

(56) References cited:
- FR-A5- 2 059 139
- GB-A- 1 450 878
- GB-A- 1 459 562
- RU-C1- 2 340 019
- RU-C1- 2 543 609
- US-A- 3 944 468
- US-A- 3 944 468

## Description

### Field of the invention

The invention relates to nuclear technology and may be used in preparing fuel rods and fuel assemblies for the cores of fast-neutron reactors utilizing a liquid-metal coolant.

### Background of the Invention

It is known a fuel rod to form fuel assemblies of fast-neutron reactors utilizing a liquid-metal coolant. The fuel rod comprises nuclear fuel which is disposed in a hermetically-sealed container in the form of a thin-walled tubular casing made of chromium steel and end components. The fuel rod also comprises a spacing element in the form of a wire which is wound in a wide-pitch spiral along an outer surface of the casing and which is secured at the ends of the fuel rod, to the casing or to the end components. The spacing element is configured to form fuel assemblies in the form of a bundle of parallel fuel rods which are regularly spaced across the cross-section of the fuel assemblies. This configuration of the fuel rod and the fuel assemblies has been successfully accepted in sodium-cooled fast-neutron reactors of the BN-type. In the reactors of the BN-type, an outer diameter of the fuel rod casing is varied in the range from 5.9 mm to 7.5 mm, a wall thickness is about 0.3 mm, and a diameter of a wire used to produce a spacing element defining a minimal distance between casings of adjacent fuel rods within a triangular array of fuel assemblies is about 1 mm. However, such fuel rod configuration has drawbacks when used in fuel assemblies for designed lead-cooled fast-neutron reactors utilizing uranium-plutonium nitride fuel. These drawbacks arise because in order to provide optimal characteristics of such reactor cores, diameters of fuel rod casings and pellets, as well as a distance between casings of adjacent fuel rods have higher values. For instance, an outer diameter of a casing for a developed reactor of the BP-1200 type can be more than 10 mm, and a distance between adjacent fuel rods in a fuel assembly can be more than 3 mm. In this case, when using the known configuration of fuel rods for the reactor of the BP-type, a stainless steel wire of about 3 mm in a diameter is wound around a thin-walled tube. Such fuel rod configuration significantly increases metal consumption for fuel assemblies, thus, deteriorating neutron and physical characteristics of a reactor core. Moreover, a heavy wire wound under a specified tension across a surface of a thin-walled casing can significantly deform the geometric shape of the fuel rod, e.g., it can be distorted. Another drawback of such fuel rod configuration is that the spacing element is rigid in its transverse plane of section. That is why spacing elements deformation can not compensate the fuel swelling and increase in diameter of fuel rod casing during fuel irradiation in the core. This results in further deformations and tensions in the thin-walled casing of fuel rods, acceleration of pitting corrosion processes and an increase of the probability of casing failure in a zone where the casing contacts the spacing element.

It is known a fuel rod to form fuel assemblies for fast-neutron reactors utilizing a liquid-metal coolant, comprising nuclear fuel which is disposed in a hermetically-sealed container in the form of a thin-walled steel tubular casing and end components (1P8646791). The fuel rod also comprises a spacing element in the form of a wire wound in a spiral around an outer surface of the casing and secured to the end components of the fuel rod. The wire of the spacing element extending along the fuel rod has a varying diameter - in a low and an upper part the fuel rod wire has a diameter of 1.4 mm, and in a central part the fuel rod has a slightly less diameter. Such configuration of the fuel rod decreases the mechanical impact thereof on the casing in the central part of the fuel rod which is subjected to the intense irradiation-induced swelling during the fuel radiation process. However, this configuration has the same drawback of the described above analog solution which considerably limits its usage in cores of fast-neutron reactors utilizing a lead coolant. In addition, the known configuration of the fuel rod decreases the transverse rigidity of the central part of fuel assemblies at the beginning of the burnout, thus, causing the fuel rod casings to distort.

It is known a fuel rod to form fuel assemblies for fast-neutron reactors utilizing a liquid-metal coolant, comprising nuclear fuel which is disposed in a hermetically-sealed container in the form of a thin-walled steel casing with end components and a spacing element, which is arranged on an outer surface of the casing and secured at ends of the fuel rod (OB1459562). The spacing element is a spiral wire in the form of a spring which is wound in a wide-pitch spiral around the casing outer surface. Such configuration helps to maintain the desired distance between the adjacent fuel rods of a fuel assembly with a relatively low metal consumption for the element. However, a spacing element in a fuel rod with such configuration is produced of a relatively thin wire the length of which is several times higher than that of the fuel rod. That is why when a liquid-metal-coolant in a reactor core is heated up to operating temperatures, the total length of the wire is greatly increased resulting in local distortions of the spiral geometrics and in a displacement of spiral turns with respect to the surface of the fuel rod casing. It increases the risk of multiple focal points of fretting corrosion at contact points between movable spring turns and the fuel rod casing to be formed.

It is known a fuel rod to form fuel assemblies for fast-neutron reactors utilizing a liquid-metal coolant, comprising nuclear fuel which is disposed in a hermetically-sealed container in the form of a thin-walled steel tubular casing and end components. The spacing element is wound in a wide-pitch spiral around a casing surface and secured at the end components of the fuel rod (OB1450878). The spacing element is made in the form of a cable consisted of several (three or more) wires. Due to such configuration, it becomes possible to distribute the spacing element functions across several wires providing by that the desired combination of its properties. The required longitudinal strength of the spacing element and spacing distance between fuel rods in the fuel assemblies is provided by selecting the number of wires and wire diameters. The transversal deformability of the spacing element during fuel swelling are provided by making the wires displaceable with respect to each other and by making it possible to locally change the shape of the cross-section of the cable in the zone of contact between casings of the adjacent fuel rods. The drawbacks of this configuration include its relatively high metal consumption, the complex process of securing the multiple-wire cable to the fuel rod, as well as the increased risk of corrosion and destruction of thin wires by the lead coolant.

It is known a fuel rod to form fuel assemblies for fast-neutron reactors utilizing a liquid-metal coolant, comprising nuclear fuel which is disposed in a hermetically-sealed container in the form of a thin-walled steel tubular casing and end components. A spacing element secured to the components of the fuel rod is wound around a surface of the casing (1183944468). The spacing element is made as two intercoupled components - a thin-walled tube and a reinforcing wire arranged inside the tube. In addition, the end components comprise only the wire attached thereto, and the tube is pressed between the wire and an outer surface of the casing at the stage of fuel rod production. This configuration allows properties and functions of the spacing element to be distributed between two components thereof by which the desired complex of properties is provided. The required longitudinal strength of the spacing element is provided by selecting a wire diameter. The desired spacing between fuel rods in the fuel assemblies is provided by selecting an outer diameter of the tube. The spacing element deformation and radial compensation of fuel swelling is provided by means of a small tube wall thickness. The drawbacks of this configuration include the configuration complexity, the relatively high metal consumption and the increased risk of accumulation of active impurities from the coolant in a narrow gap between the wire and the tube. This considerably increases the risk of local superheating in the casing and corrosion centers in the lead coolant in the points of contact between the casing, the wire and the tube.

It is known a fuel rod of a fast-neutron reactor, including nuclear fuel which is disposed in a hermetically-sealed container in the form of a thin-walled tubular casing and end components, a spacing element wound in a wide-pitch spiral around an outer surface of the casing and secured to the ends of the casing or to the end components (FR 2059139). The spacing element is made in the form of a thin-walled tube having a longitudinal through-slot along the length and the end components to be secured to the ends of the fuel rod. This technical solution is aimed at stable and flexible spacing of the fuel elements. The drawback of this structure is lack of possibility for compensation of nonuniform fuel rod swelling during use and, as a result, high mechanical stresses in fuel rod casings applied by spacing elements.

### Summary of the invention

The object of the invention is to improve neutron and physical parameters of a fast-neutron reactor core, as well as to improve the operational reliability of fuel rods and fuel assemblies. This object is attained by the technical effect of the present invention which consists in reducing the metal consumption for a fuel rod and maintaining its operability after swelling, in the use, as the result of the reduction of mechanical stresses in fuel rod casings applied by spacing elements.

The invention is defined in claim 1. According to the invention, a fuel rod of a fast-neutron reactor (comprising nuclear fuel which is disposed in a hermetically-sealed container in the form of a thin-walled steel tubular casing and end components, a spacing element wound in a wide-pitch spiral around an outer surface of the casing and secured at the ends of the fuel rod, to the casing and/or to the end components, wherein inside the fuel rod casing additional components can be arranged, such as fuel pellet holders or inserts made of non-fissile materials, a metal melt, etc.) includes a spacing element made in the form of a thin-walled tube with a through longitudinal slot extending on the length thereof and end sections for securing the spacing element on the fuel rod.

The specific embodiments of the fuel rod include the following parameters:
- the slot extends along the entire length of the spacing element tube,
- the slot width in the spacing element tube is in the range from 0.1 to 0.3 of the outer diameter of the tube,
- the slot width in a middle part of the spacing element tube is more than that of the slot on its periphery,
- the thickness of tube wall is in the range from 0.25 to 1 of the thickness of the fuel rod casing,
- the spacing element is made of the same steel as the fuel rod casing,
- the end sections of the spacing element are made by the prior-welding expansion technique on the outer surface of the casing and/or on the end component,
- the end sections of the spacing element are welded to the fuel rod casing,
- the end sections of the spacing element are welded to the end components of the fuel rod,
- one end section of the spacing element is welded to the end component and the second one to the casing,
- the tube of the spacing element is filled, entirely or partially, with a metal or alloy which is used as a reactor core coolant, e.g., with lead.

The spacing element according to the present invention can be made of a stainless steel thin-walled tube an outer diameter of which is equal to the spacing element diameter. The tube is provided with a longitudinal cut, then a slot of the desired width is formed and end components for welding with the casing and/or end components of a fuel rod are formed. This method of production of a spacing element is characterized by the following:
- a thin-walled tube is made of stainless steel which is used in the production of a fuel rod casing,
- peripheral sections of the casing element for welding is made in the form of pieces of a cylindrical surface a working diameter of which is equal to the outer diameter of the casing and/or the end component,
- prior to forming a longitudinal through-cut in the thin-walled tube, the tube is pre-filled with a coolant material, e.g., by pouring with a lead melt.

The spacing element of the fuel rod according to the present invention can be also made of a thin tape of stainless steel. This embodiment of the method of production of a spacing element is characterized by the following:
- the tube of the spacing element is formed from a tape by known methods using dies or rollers or gauges having a working diameter equal to an outer diameter of the spacing element tube,
- end components for welding of the spacing element are formed by known methods by processing peripheral sections of the pieces with the dies, rollers or
gauges, wherein the working diameter is equal to the outer diameter of the casing and/or the end component,
- the tube of the spacing element is formed by using a central bar in the form of a wire with a diameter equal to an inner diameter of the tube,
- the middle part of the spacing element is formed by using the central bar in the form of a lead wire with a diameter equal to the diameter of the tube inner;
- the slot width in the tube is calibrated at the stage of formation of the spacing element,
- the tape is produced from steel used for the fuel rod casing,
- the tape is formed from the fuel rod casing by cutting it into longitudinal segments of a fixed length and width and by further processing it, e.g., for rolling out.

### Brief description of drawings

The present invention is explained drawings shown in Fig. 1 to 6, where some embodiments of the fuel rod, the spacing element, and the method are illustrated in details.

In Fig. 1 a cross-section view of a fuel rod with a spacing element in the form of a thin-walled tube with a longitudinal slot is shown.

In Fig. 2 a cross-section view of a fuel rod with a spacing element in the form of a thin-walled tube with a longitudinal slot is shown, where the tube is filled, entirely or partially, with a coolant material, e.g., with lead.

In Fig. 3 a view of an end section of the fuel rod is shown with a spacing element welded to a casing.

In Fig. 4 a scheme of cutting out a longitudinal segment is shown for making a spacing element from a tube for a fuel rod casing according to a second embodiment of the method.

In Fig. 5 a scheme of forming a spacing element according to the second embodiment of the method: a) without an insert, c) with an insert in the form of a lead wire.

In Fig. 6 an overall view of a spacing element is shown.

### Description of embodiments of the present invention

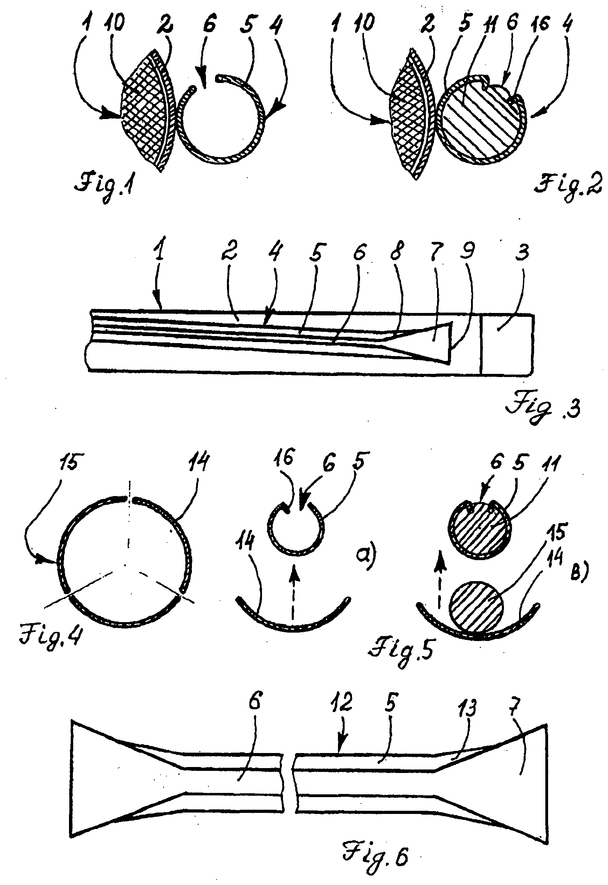

A fuel rod (1) in accordance with one of the embodiments of the present invention (see Fig. 1, Fig. 2 and Fig. 3) comprises a thin-walled casing (2) which has ends sealed with end components (3). A spacing element (4), comprising a tube (5) with a longitudinal slot (6), end sections (7) and a transition section (8), is wound around an outer surface of the casing (2) a wide-pitch spiral. An edge (9) of the end section (7) is welded to the casing (2). Nuclear fuel (10) and, if necessary, other components and materials, such as fuel holders, elements from non-fissible materials, metal melts, etc. (not shown) are arranged inside the casing (2). Inside the tube (5) can comprise a coolant material (11), e.g., lead which is included in the form of a wire into a composition of the spacing element during manufacturing thereof.

The fuel rod (1) configuration compensates the irradiation-induced swelling of casings in a reactor core in the result of compressibility and deformation of the tube (5) provided with the slot (6) having a width from 0.1 to 0.3 of an outer diameter of the tube (5). The transversal deformation of the tube (5) within the slot width doesn't provoke any considerable increase of contact stresses in the casing (2), thus, making the casing more reliable at high burnout temperatures. In addition, such configuration of the fuel rod (1) with the longitudinal slot (6) of said width allows in the reactor core coolant entering and exiting in the tube (5) both in a longitudinal and transverse direction. This decreases the risk of formation of local areas for the accumulation of active impurities from the coolant, as well as superheating and corrosion centers in the casing (2). Including the nonuniform burnout and swelling of the casing (2) in the height of the fuel rod, the slot (6) width can be made unequal and in the middle part of the tube (5) it can be something higher than on the periphery. Such configuration helps to optimize the geometrics stability and the rigidity of fuel assemblies.

To provide an optimal combination of rigidity of the spacing element (4) and to reduce stresses caused by the transverse deformation, the thickness of a tube (5) wall and end sections (7) of the spacing element is selected in the range of 0.25 to 1 of the thickness of the casing (2) of the fuel rod. Said thickness of the spacing element (4) wall and the use of the same steel as for the casing (2) of the fuel rod helps to create the best possible conditions to achieve strong and reliable welded joints between the end sections (7) and the casing (2) and/or the end components (3). Thanks to such configuration of the fuel rod, various types of welded joints of structural elements can be obtained, such as the end sections (7) can be welded to the casing (2) or to the end components (3), or one end section (7) can be welded to the end component (3) and another one to the casing (2). The width of the slot (6) can be defined not only by the width by inside folding the edges (16) of the tube (5). Such foldings (16) increase the stability of the spacing element (4) shape during fuel rod manufacturing.

The fuel rod (1) can be made with the spacing element (4) having the tube (5) fully or partially filled with the coolant material (11), e.g., with lead. Such configuration provides the improved structural strength and rigidity of the fuel rod and fuel assemblies formed from this fuel rod during formation of a fast-neutron reactor core. At the reactor start-up and supplying the hot coolant into its core, the lead (11) in the tube (5) is melted and transits into the coolant composition.

The configuration of the spacing element for the fuel rod according to the present invention and the method of production of the spacing element is illustrated by Fig. 4, Fig. 5 and Fig. 6.

Fig. 4 shows an overall view a blank (12) which after being wound in a wide pitch around an outer surface of a casing (2) and secured thereon creates a spacing element (4) of a fuel rod. The blank is made in the form of a thin-walled tube (5) and end sections (7) in the form of a fragment of a cylindrical casing with an inner diameter for welding with the casing (2) or an end component (3). The tube (5) and the end sections (7) are interconnected via transition sections (13) the shape of which provides the coupling for welding the end sections (7) with the casing (2) or the end component (3). The end sections (7) can comprise technological sections (not shown) which are specifically used in winding the blank around the fuel rod casing and are removed after the spacing element (4) is secured. The ratio of the dimensions of blank components, the characteristics of the material used for manufacturing thereof are given above with respect to the spacing element (4) in the fuel rod configuration according to the invention.

The tube (5) can be fully or partially filled with a coolant material (11), e.g., with lead, to fix the shape and sizes the tube (5) when producing the fuel rod and winding the blank (12) around the casing (2).

In accordance with the first embodiment of the method of production of the spacing element, the blank (12) is formed from a thin-walled tube the casing of which is provided with a through-cut creating a longitudinal slot (6) of a pre-defined width. The width of the slot (6) can be defined not only by the width by inside folding the edges (16) of the tube (5). Such foldings (16) increase the stability of the spacing element (4) shape during fuel rod manufacturing.

An outer diameter of the thin-walled tube is equal to the diameter of the tube (5) of the spacing element. Then, end sections (7) for welding of the spacing element (4) are formed as fragments of a cylindrical surface with a diameter equal to the outer diameter of the casing and/or an end component. The thin-walled tube is made of stainless steel which is used in the production of the fuel rod casing. To improve the stability of the geometrics of the spacing element (4), prior to forming a longitudinal through-cut in the thin-walled tube, the tube is pre-filled with a coolant material, e.g., by pouring with a lead melt. The length of the blank (12) is defined based on the length and diameter of the casing (2) of the fuel rod, as well as on the pre-define winding pitch of the blank (12) around the casing (2) when the spacing element (4) of the fuel rod is formed.

In accordance with a second embodiment of the method, the spacing element is formed from a thin stainless steel tape. The most appropriate solution is to make the tape of steel which is used for the fuel rod casing. This steel is highly corrosion-resistant in a metal coolant, e.g., in lead. The tape can be obtained from tubes produced according to the technology used to manufacture fuel rod casings. For this, for instance, the tube (15) can be cut into longitudinal pieces (14) of a fixed length and width and fragments can be further processed (e.g., to increase the thickness), such as they can be rolled out.

The tube (15) is either identical to tubes for fuel rod casing or is a tube produced after some additional processing of the tube for the casing, e.g., for thickness reduction. The method includes forming (rolling-up) the resulted piece (14) in the form of a tube (5) with a longitudinal through-slot (6) of the pre-defined width having end sections (7) for welding with a casing (2) or end components (3) of a fuel rod. The length of the blank (12) is defined based on the length and diameter of the casing (2) of the fuel rod, as well as on the pre-define winding pitch of the blank (12) around the casing (2) when the spacing element (4) of the fuel rod is formed. If prior to forming a spacing element (4) a longitudinal piece (12) is rolled out, the initial length and width of the piece are selected based on the growth of its sized after rolling-out is finished.

The tube (5) is formed by any known method, such as by rolling up the piece (14) with its drawing through an outer gauge or by pressing it (rolling up) with forming rollers. A working diameter of forming devices is selected equal to the outer diameter of the tube (5). The width of the slot (6) is formed by calculating the arc length of the piece (14) depending on the tube (5) diameter. The width of the slot (6) can be precisely calibrated by forming folding (16) on one or two edges of the slot (6). The excessive part of the circumference of the tube (5) can be removed during slot (6) calibration when the blank (12) is formed. Peripheral sections of the blank for welding are formed, e.g., using a mandrel with a working diameter equal to the outer diameter of the casing (2) or corresponding to geometrical parameters of the end component (3). To precisely fix the geometrical shape and sizes of elements of the blank (12), a tubular section of the blank is formed by using a central bar in the form of a wire (11) having a diameter equal to the inner diameter of the tube (5). In accordance with one the possible embodiments of blank production, a lead wire (11) is used having a diameter equal to the inner diameter of the tube (5). Thus, it is not necessarily to remove the wire from the tube (5) upon completion of blank (12) formation and to use the blank in the form of such composition in the formation of the spacing element (4) by winding the wire around the casing (2) and then in the production of a fuel rod. Such technical solution allows to make the geometrical shape and sizes of fuel rods more stable and to space them from each other and arrange inside a fuel assembly more regularly.

In accordance with the first and second embodiment of the method of production of a spacing element, during forming a blank (12) with the use of a drawing die or a mandrel the width of the slot (6) in the tube (5) is needed to be calibrated. In accordance with one of the specific embodiments of the method, such calibration includes forming an increased width of the slot (6) in the middle part of the blank (12) to take into account the nonuniform irradiation-induced fuel swelling in the height of the fuel rod.

Further are shown examples of production of a spacing element for a fuel rod according to the present invention.
Example 1. In accordance with the first embodiment of the method, a spacing element (4) is produced having an outer diameter of a tube (5) equal to 4 mm for a fuel rod with an outer diameter of a casing of 12 mm and thickness of 0.5 mm. The casing (2) is made of steel which is highly corrosion-resistant in a lead coolant environment. To produce a blank (12) a thin-walled tube of stainless steel with an outer diameter of 4 mm and a wall thickness of 0.3 mm (i.e., equal to 0.6 of the thickness of the fuel rod casing) is formed by any known methods. The length of the thin-walled tube is defined based on the length and diameter of the casing (2) of the fuel rod, as well as on the pre-define winding pitch of the spacing element (4) around the casing of the fuel rod (1). A longitudinal through-cut with a width of 1 mm (i.e. 0.25 of the outer diameter of the thin-walled tube) is made along the entire thin-walled tube and a tubular part (5) with a slot (6) of the spacing element (4) are formed. Then, end sections (7) are created by expending the thin-walled tube for welding with the casing (2) or end components (3) of the fuel rod in the form of fragments of a cylindrical surface having a radius equal to the radius of the casing (2), i.e. 12 mm.
Example 2. A spacing element (4) for a fuel rod is produced with sizes shown in Example 1. To produce a blank (12) a thin-walled tube of stainless steel with sizes shown in Example 1 with the outer diameter of 4 mm and a wall thickness of 0.3 mm (i.e., equal to 0.6 of the thickness of the fuel rod casing) is formed. A longitudinal through-cut with a width of 0.4 mm is made along the entire thin-walled tube. Then, by means of a calibration, the final width of the slot (6) of 1.2 mm is formed, i.e. 0.3 of the outer diameter of the thin-walled tube. During calibration, one or both longitudinal edges of the slot are folded inside the tube (5) to form folds (16) with the overall height is 0.7 mm (1.2-0.4). Then, end sections (7) are created by expending the thin-walled tube for welding with the casing (2) or end components (3) of the fuel rod in the form of fragments of a cylindrical surface having a radius equal to the radius of the casing (2), i.e. 12 mm.
Example 3. A fuel rod element is made with a casing outer diameter of 12 mm, a thickness of 0.5 mm, wherein the outer diameter of the tube (5) is equal to 4 mm. The casing is made of steel which is highly corrosion-resistant in a lead coolant environment. To produce the element, a tube (15) is used the diameter, wall thickness and material of which are identical to that of tubes used to produce the fuel casing, i.e. with an outer casing diameter of 12 mm and a thickness of 0.5 mm. The length of the tube (15) for the fragments (14) and blanks (12) is defined based on the length and diameter of the casing (2) of the fuel rod, as well as on the pre-define winding pitch of the spacing element (4) around the casing of the fuel rod (1).
   The tube (15) having a circumference of 37.68 mm is cut into three equal longitudinal fragments (14) having an arc length of 12.56 mm (37.68:3) minus a thickness of a cutting wheel. Having the tool thickness of 0.56 mm, we obtain three fragments (14) with the arc length of 12 mm. These fragments (14) are used to form the blank (12) the outer diameter of the tube (5) equal to 4 mm and the width of the slot (6) equal to 0.25 of the outer diameter of the tube (5) which is 1 mm. The excessive part of the circumference of the tube (5), which in the present case is 0.44 mm, can be compensated by forming folds (16) facing inside the tube (5) on one or two edges of the slot (6). The excessive part of the circumference of the tube (5) is defined as the difference between the sum of the arc length of the fragment (14) which is 12 mm and the width of the slot (6) which is 1 mm and the circumference of the tube (5) which is 12.56 mm (i.e.: 12 +1 - 12.56 = 0.44).
   In accordance with a further embodiment, the excessive part of the circumference of the tube (5) can be removed during slot (6) calibration when the blank (12) is formed. The end sections (7) are formed for welding with the casing (2) in the form of fragments of the cylindrical surface having a radius equal to the radius of the casing (2), i.e. 12 mm.
Example 4. The element (12) for a fuel rod having sizes explained in Example 1 (with a casing outer diameter of 12 mm, a thickness of 0.5 mm, wherein the outer diameter of the tube (5) is equal to 4 mm) is made. To produce the blank (12), the tube (15) is used the diameter, wall thickness and material of which are identical to that of tubes used to produce the fuel casing. As in Example 1, three fragments (14) having an arc length of 12 mm are made. These fragments (14) are used to form the blank (12) the outer diameter of the tube (5) equal to 4 mm and the width of the slot (6) equal to 0.25 of the outer diameter of the tube (5) which is 1 mm. The tube (5) is formed using a lead wire (11) having a diameter of 3 mm, which is previously placed in the center of the blank (12) along the length of the tube (5).
Example 5. The element (12) for a fuel rod having sizes explained in Example 1 (with a casing outer diameter of 12 mm, a thickness of 0.5 mm, wherein the outer diameter of the tube (5) is equal to 4 mm) is made. To produce the blank (12) the tube (15) is used having a wall thickness of 0.6 of the thickness of the fuel rod casing, i.e. 0.3 mm. The tube (15) is made in the result of a further thermal and mechanical treatment of the tube used to produce the fuel rod casing. The length of the tube (15) for the fragments (14) and blanks (12) is defined based on the length and diameter of the casing (2) of the fuel rod, as well as on the pre-define winding pitch of the spacing element (4) around the casing of the fuel rod (1).
   The tube (15) is cut into longitudinal fragments (14) with an arc length of 12 mm. These fragments (14) are used to form the blank (12) the outer diameter of the tube (5) equal to 4 mm and the width of the slot (6) equal to 0.25 of the outer diameter of the tube (5). The blank (12) is formed as in Example 1. If the blank (12) is formed as in Example, the diameter of the lead wire (11) is 3.4 mm.
Example 6. In accordance with the second embodiment of the method, a blank (12) is made for the spacing element (4) of a fuel rod having sizes explained in Example 1 (with a casing outer diameter of 12 mm, a thickness of 0.5 mm, wherein the outer diameter of the tube (5) is equal to 4 mm). To produce the element (12) a thin-walled tube of stainless steel with an outer diameter of 4 mm and a wall thickness of 0.3 mm (i.e., equal to 0.6 of the thickness of the fuel rod casing) is formed by any known methods. A longitudinal through-cut with a width of 1 mm (i.e. 0.25 of the outer diameter of the thin-walled tube) is made along the entire thin-walled tube and a tubular part (5) with a slot (6) of the spacing element (4) are formed. Then, end sections (7) are created by expending the thin-walled tube for welding with the casing (2) or end components (3) of the fuel rod in the form of fragments of a cylindrical surface having a radius equal to the radius of the casing (2), i.e. 12 mm.
Example 7. A fuel rod element is made with a casing outer diameter of 12 mm, a thickness of the casing of 0.5 mm, wherein the outer diameter of the tube (5) is equal to 4 mm. The casing is made of steel which is highly corrosion-resistant in a lead coolant environment. To produce the element (12) a tape is used made of a material for the fuel rod casing. The tape width is 12 mm, the thickness is 0.15 mm (i.e., 0.3 of the casing thickness). Then, the element (12) is formed according to modes explained n Example 3.
Example 8. In accordance with the first embodiment of the method, a spacing element (4) is produced having an outer diameter of a tube (5) equal to 4 mm for a fuel rod with an outer diameter of a casing of 12 mm and thickness of 0.5 mm. The casing (2) is made of steel which is highly corrosion-resistant in a lead coolant environment. To produce a blank (12) a thin-walled tube of stainless steel with an outer diameter of 4 mm and a wall thickness of 0.3 mm (i.e., equal to 0.6 of the thickness of the fuel rod casing) is formed by any known methods. The length of the thin-walled tube is defined based on the length and diameter of the casing (2) of the fuel rod, as well as on the pre-define winding pitch of the spacing element (4) around the casing of the fuel rod (1). The thin-walled tube is filled with a coolant melt from a nuclear reactor core, e.g., with a lead melt. After cooling down the tube, a longitudinal through-cut with a width of 1 mm (i.e. 0.25 of the outer diameter of the thin-walled tube) is made along the entire tube and a tubular part (5) with a slot (6) of the spacing element (4) are formed. Then, end sections (7) are created by expending the thin-walled tube for welding with the casing (2) or end components (3) of the fuel rod in the form of fragments of a cylindrical surface having a radius equal to the radius of the casing (2), i.e. 12 mm.

The inventive configuration allows the considerable reduction of metal consumption of a fuel rod by means of a spacing element made in the form of a thin-walled tube. A longitudinal through-slot made in the spacing element of the tube allows to improve its transverse deformability and to reduce local stresses arising in the fuel rod casing when fuel in a reactor core is burnt out. Said technical results help to improve neutron and physical parameters of a fast-neutron reactor core, as well as to improve the operational reliability of fuel rods and fuel assemblies. The technical solution allows to reduce the longitudinal rigidity of the spacing element. This makes possible to wind the blank of the spacing element at the desired tension around a surface of a thin-walled casing without significant deformations of geometrics of the fuel rod. In addition, the inventive configuration provides highly reliable welded joints between the spacing element and the casing which are achieved due to the uniform composition, structure and geometric shape of welded fragments. Said features of the technical solution allow to assume the possibility of its practical application in the manufacture of a fuel rod and fuel assemblies for fast-neutron reactors, for example, with a lead coolant.

## Claims

1. A fuel rod (1) suitable for a fast-neutron reactor is claimed, which fuel rod comprises
- a hermetically-sealed container in the form of a thin-walled tubular casing (2) and comprising end components (3),
- nuclear fuel (10) which is disposed in the container,
- a spacing element (4) wound in a wide-pitch spiral around an outer surface of the casing (2) and
- wherein the spacing element (4) is made in the form of a thin-walled tube (5) having a longitudinal through-slot (6) along the length and wherein the spacing element comprises end sections (7) which are secured to the ends of the casing (2) or to the end components (3),
**characterized in that** the slot (6) is formed by folding inside longitudinal edges (9) of the tube.

2. The fuel rod according to claim 1, **characterized in that** the slot (6) width in the spacing element tube (5) is in the range from 0.1 to 0.3 of the outer diameter of the tube (5).

3. The fuel rod according to claim 2, **characterized in that** the slot (6) width in a middle part of the tube (5) is more than that of the slot (6) on the periphery.

4. The fuel rod according to claim 1 or 2, **characterized in that** the wall thickness of the tube (5) is in the range from 0.25 to 1 of the thickness of the fuel rod casing (2).

5. The fuel rod according to claim 1, **characterized in that** the spacing element (4) is made of the same steel as the fuel rod casing (2).

6. The fuel rod according to claim 1, or claim 2, **characterized in that** the end sections (7) of the spacing element (4) are made in the form of a fragment of a cylindrical casing to be secured to the casing (2) and/or the end component (3) of the fuel rod.

7. The fuel rod according to claim 1, **characterized in that** the end sections (7) of the spacing element (4) are welded to the casing (2) of the fuel rod.

8. The fuel rod according to claim 1, **characterized in that** the end sections (7) of the spacing element (4) are welded to the end components (3) of the fuel rod.

9. The fuel rod according to claim 1, **characterized in that** one end section (7) of the spacing element (4) is welded to the end component (3), and another one is welded to the casing (2) of the fuel rod.

10. The fuel rod according to claim 1, **characterized in that** the spacing element (4) is made of a thin tape of stainless steel.

11. The fuel rod according to claim 1, **characterized in that** the tube of the spacing element (4) is filled with coolant material (11), e.g., with lead.

## Patentansprüche

1. Es wird der Patentschutz für einen Brennstoffstab (1) beantragt, der für einen Reaktor mit schnellen Neutronen geeignet ist, wobei der Brennstoffstab Folgendes enthält
- einen hermetisch verschlossenen Behälter in Form eines dünnwandigen Rohrgehäuses (2), das Endkomponenten enthält (3),
- den Kernbrennstoff (10), der sich im Behälter befindet,
- das Abstandselement (4), das in einer Spirale mit großer Teilung um die Außenfläche des Gehäuses (2) gewickelt ist, und
- wo das Abstandselement (4) in Form eines dünnwandigen Rohrs (5) mit einem in Längsrichtung laufenden, durchlässigen Schlitz (6) gefertigt ist und das Abstandselement Endteile (7) enthält, die an den Enden des Gehäuses (2) oder an den Endekomponenten angebracht sind (3),
**dadurch gekennzeichnet, dass** der Schlitz (6) durch Falten innerhalb der Längskanten (9) des Rohres gefertigt ist.

2. Brennstoffstab nach Anspruch 1, **dadurch gekennzeichnet, dass** die Schlitzbreite (6) im Rohr des Abstandselementes (5) im Bereich von 0,1 bis 0,3 des Rohraußendurchmessers (5) liegt.

3. Brennstoffstab nach Anspruch 2, **dadurch gekennzeichnet, dass** die Schlitzbreite (6) im mittleren Rohrteil (5) größer ist als die Schlitzbreite (6) am Rand.

4. Brennstoffstab nach Anspruch 1 oder 2, **dadurch gekennzeichnet, dass** die Rohrwanddichte (5) im Bereich von 0,25 bis 1 der Dicke des Brennstoffstabgehäuses (2) liegt.

5. Brennstoffstab nach Anspruch 1, **dadurch gekennzeichnet, dass** das Abstandselement (4) aus dem gleichen Stahl wie das Brennstoffstabgehäuse (2) besteht.

6. Brennstoffstab nach Anspruch 1 oder 2, **dadurch gekennzeichnet, dass** die Endteile (7) des Abstandselementes (4) in Form eines Fragments eines zylindrischen Gehäuses hergestellt sind, das an dem Gehäuse (2) und / oder an der Endkomponente (3) des Brennstoffstabs angebracht werden soll.

7. Brennstoffstab nach Anspruch 1, **dadurch gekennzeichnet, dass** die Endteile (7) des Abstandselementes (4) mit dem Brennstoffstabgehäuse (2) verschweißt sind.

8. Brennstoffstab nach Anspruch 1, **dadurch gekennzeichnet, dass** die Endteile (7) des Abstandselementes (4) mit den Endkomponenten (3) des Brennstoffstabes verschweißt sind.

9. Brennstoffstab nach Anspruch 1, **dadurch gekennzeichnet, dass** das eine Endteil (7) des Abstandselementes (4) mit der Endkomponente (3), und das andere mit dem Brennstoffstabgehäuse (2) verschweißt sind.

10. Brennstoffstab nach Anspruch 1, **dadurch gekennzeichnet, dass** das Abstandselement (4) aus einem dünnen Edelstahlstreifen gefertigt ist.

11. Brennstoffstab nach Anspruch 1, **dadurch gekennzeichnet, dass** das Rohr des Abstandselementes (4) mit dem Kühlmaterial (11), wie zB. Blei, gefüllt ist.

## Revendications

1. Une protection par brevet est recherchée pour un barreau de combustible (1), adapté à un réacteur à neutrons rapides, dans lequel ledit barreau de combustible contient
- un récipient hermétiquement fermé sous la forme d'un boîtier tubulaire à paroi fine (2) et contenant des composants finaux (3),
- combustible nucléaire (10), qui est situé dans le réservoir,
- élément d"écartement (4), enroulé en une large spirale à gradins autour de la surface extérieure du boîtier (2) et
- dans lequel l'élément d"écartement (4) est réalisé sous la forme d'un tuyau à paroi fine (5) ayant une fente longitudinale perméable (6), et dans lequel l'élément d'écartement comprend des parties finales (7) fixées aux bouts du boîtier (2) ou aux composants finaux (3),
**caractérisé en ce que** la fente (6) est réalisée par pliage à l'intérieur des bords longitudinaux (9) du tuyau.

2. Barreau de combustible selon la revendication 1, **caractérisé en ce que** la largeur de la fente (6) dans le tuyau de l'élément d'écartement (5) va de 0,1 à 0,3 du diamètre extérieur du tuyau (5).

3. Barreau de combustible selon la revendication 2, **caractérisé en ce que** la largeur de la fente (6) dans la partie médiane du tuyau (5) est supérieure à la largeur de la fente (6) sur la périphérie.

4. Barreau de combustible selon l'une des revendications 1 ou 2, **caractérisé en ce que** l'épaisseur de paroi du tuyau (5) va de 0,25 à 1 de l'épaisseur du boîtier de barreau de combustible (2).

5. Barreau de combustible selon la revendication 1, **caractérisé en ce que** l'élément d'écartement (4) est réalisé dans le même acier que le boîtier de barreau de combustible (2).

6. Barreau de combustible selon l'une des revendications 1 ou 2, **caractérisé en ce que** les parties finales (7) de l'élément d'écartement (4) sont réalisées sous la forme d'un fragment de boîtier cylindrique à fixer au boîtier (2) et / ou au composant final (3) du barreau de combustible.

7. Barreau de combustible selon la revendication 1, **caractérisé en ce que** les parties finales (7) de l'élément d'écartement (4) sont soudées au boîtier (2) du barreau de combustible.

8. Barreau de combustible selon la revendication 1, **caractérisé en ce que** les parties finales (7) de l'élément d'écartement (4) sont soudées aux composants finaux (3) du barreau de combustible.

9. Barreau de combustible selon la revendication 1, **caractérisé en ce qu'**une partie finale (7) de l'élément d'écartement (4) est soudée au composant final (3) et l'autre au boîtier de barreau de combustible (2).

10. Barreau de combustible selon la revendication 1, **caractérisé en ce que** l'élément d'écartement (4) est constitué d'une lamelle fine d'acier inoxydable.

11. Barreau de combustible selon la revendication 1, **caractérisé en ce que** le tuyau de l'élément d'écartement (4) est rempli d'un matériau de refroidissement (11), par exemple du plomb.
